# EUROPEAN PATENT APPLICATION

(11) **EP 4 368 291 A1**
(43) Date of publication of application: **15.05.2024**
(21) Application number: 22206034.5
(22) Date of filing: 08.11.2022
(51) Int. Cl.: B01L 9/00, B01L 3/02, B01L 3/00, B65D 1/36, B65D 21/02, G01N 35/10

(54) **STORAGE DEVICE, CORRESPONDING ASSEMBLIES, AND METHOD OF USE**

(71) Applicant: TECAN Trading AG, 8708 Männedorf (CH)
(72) Inventor: DZUNG, Matthias, 8005 Zürich (CH); SAGER, Adrian, 8708 Männedorf (CH); PFLUMM, Sven, 8708 Männedorf (CH); OTT, Philipp, 8496 Steg (CH)
(74) Representative: Troesch Scheidegger Werner AG

(57) **Abstract**

A storage device 1 for storing one or more pipettor consumables 2. The storage device 1 comprises a storage plate 10 having an upper side 11 and a lower side 12, and, on the upper side 11, a number of accommodation seats 13 arranged in an array. Each accommodation seat 13 is configured to receive a pipettor consumable 2 in an upside-down orientation. The storage device 1 comprises one or more positioning elements 14 for positioning the storage device 1 in relation to a carrier 3, and/or one or more stacking elements 19 for stacking the storage device 1 with another storage device 1.

## Description

### TECHNICAL FIELD OF THE INVENTION

The current invention relates to a storage device for storing one or more pipettor consumables, to an assembly of two or more storage devices stacked one above the other, to an assembly of a storage device and a carrier for presenting one or more pipettor consumables, and to methods of stacking a storage device and of presenting a pipettor consumable using the storage device and a carrier.

### DESCRIPTION OF THE RELATED ART

Consumables for pipettors are tools which may be mounted directly or indirectly on a pipettor, and then used in a liquid handling process or in an activity related to a liquid handling process by means of the pipettor. Depending on the provided function, a consumable is available in varying structures and sizes, allowing a user the choice of a suitable function and size. Particularly in the context of automated liquid handling processes, a pipettor is typically used for the handling of relatively small liquid volumes, for example in the range of a few µl or ml, such as 5 µl, up to 2 ml. Accordingly, consumables mountable to a pipettor are also small articles, which in turn makes their handling complicated. For example, it is a known problem to accurately transport and store such small lab consumables and to present them in a correct orientation to a pipettor for use.

### SUMMARY OF THE INVENTION

It is an object of the present invention to provide a solution for a simple and accurate storage of pipettor consumables while allowing a simple access for use.

This object is solved by a storage device with the features of claim 1. Further embodiments of the storage device are defined by the features of further claims.

The object is further solved by the provision of a storage assembly of storage devices stacked one above the other, and by the provision of a presentation assembly of a storage device and a carrier for presenting a pipettor consumable.

The object is further solved by a method of stacking a storage device comprising a pipettor consumable, and by a method of providing a pipettor consumable using a storage device.

A storage device of the invention is configured for storing one or more pipettor consumables. For this, the storage device comprises a storage plate which has an upper side and a lower side. On the upper side, a number of accommodation seats are arranged. The accommodation seats may be arranged in an array. Each accommodation seat is configured to receive a pipettor consumable in an upside-down orientation. The storage device comprises one or more positioning elements for positioning the storage device in relation to a carrier, and/or one or more stacking elements for stacking the storage device with another storage device.

A pipettor is used to transfer liquids. The transfer of a liquid is herein named also as a pipetting operation. A typical pipetting operation is an aspiration and a dispensation. A pipettor is typically connected to a pressure system generating over or under pressure, such as an air displacement system for suctioning in (aspirate, under pressure) or pressing out (dispense, over pressure) defined volumes of a liquid.

A pipettor typically comprises a fitting end to which for example a pipette tip may be functionally coupled. A possible form of a fitting end is for example a conical form. A pipette tip, or another pipettor consumable is configured to be plugged or mounted onto the pipettor cone.

One or more pipettors may be organized as a pipetting head, forming part of a liquid handling system. The pipetting head may be movable within the liquid handling system, while one or more of the pipettors of a pipetting head are movable for example in a vertical direction for addressing for example a well of a microplate or another liquid container. Pipetting heads comprising for example 2, 4, 8, 96 or 384 pipettors are known.

In the context of the present invention, a liquid may be a liquid, a mixture of a liquid and a gas, a mixture of a liquid and a solid. A liquid may be single liquid or a mixture of liquids, a gas may be a single gas or a mixture of gasses, and a solid may be a single solid or a mixture of solids.

In the context of the present invention, a pipettor consumable is an article for typically a single use or only a few uses. A consumable is typically replaced by another consumable item relatively quickly. Accordingly, a typical consumable is made of an inexpensive material. A typical consumable in the context of the present invention is a disposable pipette tip for use with a pipettor. However, in the context of the present invention, also other articles are addressed to as pipettor consumables, having in common that such pipettor consumables are attachable to the fitting end of a pipettor. Such consumables must not necessarily establish a liquid channel, as it is provided by a pipette tip or a pipette tip attachment but may provide other functions which shall be brought into a specific place by means of the pipettor, preferably in an automated manner under the control of a control unit of a liquid handling system. It may be provided that the connection of the consumable and the pipettor is reversible, so that the pipettor consumable may be removed from the pipettor, for example by means of an ejection mechanism of a liquid handling system.

It may further be provided that the pipettor consumable is mounted to a pipettor directly by attaching the pipettor consumable directly to the corresponding attachment end. This is for example the case of a pipette tip or a transport tool. Alternatively, the pipettor consumable may be mounted to a pipettor indirectly by means of a connecting piece. This is for example the case of a pipette tip attachment, with is mounted to a pipette tip, which in turn is mounted to a pipettor. Here, a pipette tip functions as a connecting piece.

A storage plate is a base plate in which the accommodation seats are located. The storage plate may comprise a circumferential upper surface surrounding the array of accommodation seats.

It may be provided that the outer dimensions of the storage plate essentially define the outer dimensions of the storage device. Alternatively, it may be provided that the storage plate mainly carries the accommodation seats while the storage device further comprises additional, circumferential structures, for example for allowing the positioning and/or stacking of a carrier or another storage device.

It may be provided that the accommodation seats are arranged in an array. In the context of the present invention, an array is an arrangement of, for example accommodation seats, or wells of a microplate in a specific manner. The arrangement is described with the example of accommodation seats, though applicable for example also to wells of a microplate, etc... For example, accommodation seats are arranged in an array when they are arranged in rows and columns.

The rows and columns are arranged in a right angle to each other. The distance is equidistant to each other in x and y direction.

The rows and columns are displaced by half a distance. The distance is equidistant. This array is comparable to a honeycomb pattern ("interlaced").

The distance between rows or columns is different than the distance between positions within a line or within a column.

Positions win a circle are arranged equidistantly.

Deviating arrangements of accommodation seats are possible, too. An array on the basis of rows and columns is not mandatory. The arrangement may be based on the pipettor consumable and the later use.

A number of accommodation seats means in the present context that at least one accommodation seat is provided in the upper side of the storage plate, the at least one accommodation seat being arranged in defined distances to the outer edges of the longitudinal sides and the outer edges of the transverse sides. It may particularly be provided that a number of accommodation seats means at least two or more accommodation seats. In this case, the two or more accommodation seats are not only individually arranged with reference to the outer edges of the longitudinal and transverse sides but are furthermore arranged in specific positions with reference to each other, thereby forming an array.

Each accommodation seat is configured to receive a pipettor consumable in an upside-down orientation. In particular, each accommodation seat may be dimensioned to hold a pipettor consumable with play but without the pipettor consumable falling out of the accommodation seat when the storage device is moved for example horizontally for transportation between different laboratory sites. Furthermore, it may be provided that each accommodation seat provides a support surface onto which a pipettor consumable may be laid on.

In an upside-down orientation refers in the present context to the orientation in which the pipetting consumable is stored. In the present context, the upside refers to the proximal end of a pipettor consumable, with which it is mounted onto a pipettor. The proximal end corresponds here to the upper edge of the pipettor consumable, which encloses (e.g., via walls) an opening or aperture (herein also called a plug-on aperture), into which a fitting end of a pipettor is inserted. Accordingly, the bottom side refers to the distal end of a pipettor consumable, which is opposite to the upper side, and which carries structures according to the function the pipettor consumable provides.

In a suitable use of the storage device, an originally upside-down inserted pipettor consumable in the storage device slides - with the distal end first - into a corresponding reception in the carrier, when the storage device is placed onto that carrier "front-to-front". A front-to-front placement refers to the placement of a storage device with the upper side onto an upper side of a carrier. As a result, the previously in the storage device not-accessible proximal end of the pipettor consumable is inverted and now is presented correctly in a carrier with the upper side (the plug-on aperture) oriented towards a pipettor for take-up.

The storage device comprises on the upper side one or more positioning elements for positioning the storage device in relation to a carrier, and/or one or more stacking elements for stacking the storage device with another storage device.

In the present context, a positioning element particularly refers to a structure or structures which simplifies reaching a correct position of the storage device in relation to a carrier for use in a liquid handling system. In particular, a positioning element may guide the storage plate into a correct front-to-front-placement, thereby bringing the accommodation seats of a storage device into a congruent position with corresponding receptions in the carrier for turning around the upside-down places pipettor consumables.

It may be provided that one or more of the positioning elements are arranged at the on the upper side of the storage plate of the storage device. This may be particularly advantageous when - for guiding the storage plate into the correct position towards a carrier - the positioning element is configured for directly interacting with a complementary structure on the upper side of the corresponding carrier. It may however be provided that the positioning element is configured and arranged so that the positioning function reaches to the upper side of the storage plate for interacting with a carrier.

It may be provided that the storage device comprises at least two positioning elements, which has the advantage of mediating a more precise positioning effect compared to a single positioning element. In particular, it might be advantageous providing two positioning elements arranged on diagonally opposite corners of the storage device, to inhibit a rotating around one single positioning element.

A positioning element may interact with a carrier or with another storage device for example by a form-fit or a friction-fit connection.

In the present context, a stacking element particularly refers to a structure or structures which particularly allows or simplifies the stacking of two or more storage devices one on top of the other, to assure a certain stability of the storage devices in a stack. It may be provided that one or more stacking elements of one storage device interacts with another one or more compatible stacking elements of a storage device positioned above and/or positioned below. A stacking element may further function as a positioning element, when it is configured to additionally guide another storage device into a desired position in a stack.

It may be provided that a positioning element not only provides a positioning function towards a carrier, but that the same positioning element further provides a position guidance function towards another storage device, thereby stabilizing a stack of two or more storage devices. In this case, a positioning element also functions as a stacking element.

It may be provided that one or more of the positioning elements are arranged on the storage plate. In this case, the outer dimensions of the storage device are determined by the outer dimensions of the storage plate. Alternatively, it may be provided that one or more positioning elements are arranged on the storage device so that they protrude over the outer edges of the storage plate. The outer dimensions of the storage device are in this case determined by the size of the storage plate and the "outside" of the storage plate positioned positioning elements. The same may apply for the stacking elements.

In an embodiment of the invention, which may be combined with any other of the embodiments which where or will be mentioned, unless there is a contradiction, each accommodation seat comprises a support bottom and a lateral support. It is provided that each accommodation seat is configured to hold a pipettor consumable in an upside-down orientation. For this, it is provided that the support bottom is configured being abuttable by a plug-on aperture at a proximal end of a pipettor consumable. As a result, a distal end of a pipettor consumable comprising a functional element faces away from the support bottom when the pipettor consumable is inserted into an accommodation seat.

The functional site of a pipettor consumable is thus presented by a storage device towards a user, while the plug-on aperture of the pipettor consumable for functional connection with a pipettor is hidden within the accommodation seat at the bottom.

For holding a pipettor consumable, the dimension and/or the form of a support bottom may be adapted to the dimension and/or the size of the proximal end of a pipettor consumable to be stored. For example, if a pipettor consumable itself is adapted to be mountable onto a pipettor of a 384er pipetting head, the support bottom may be adapted in its dimensions to the size and form of a plug-on aperture of such a relatively small pipettor consumable.

The support bottom may be a continuous bottom, or alternatively, the support bottom may be a discontinuous bottom structure providing a surface onto which a pipettor consumable may be placed on with the proximal end and remains retained.

It may be provided that the support bottom comprises additional elements or structures to improve the stability of a pipettor consumable in the accommodation seat. Such additional elements or structures may e.g. be a particularly rough surface, or additional holding elements such as small webs or ribs.

Additionally, or alternatively, the dimension and/or the form of a lateral support may be adapted to the dimension and/or the form of the proximal end of a pipettor consumable to be stored. For example, in case of a relatively short pipettor consumable shall be stored, the lateral support extends by a height from the support bottom which corresponds to the relatively short length of the pipettor consumable. It may be provided to adapt the lateral support in a way to ensure that the stored pipettor consumable rests with play in the accommodation seat without the danger of twisting when the pipettor consumable glides into a reverse position in the presentation seat of a carrier.

It may be provided in a simple embodiment that the lateral support is merely a circumferential wall starting at the support bottom and extending towards and up to the upper side of the storage plate. The wall may be a continuous wall or a discontinuous wall.

The height of the lateral support here refers to the distance by which the lateral support extends from the support bottom towards the upper side of the storage plate.

The holding effect may be improved by additional characteristics or structures, such as a rough surface or additional webs or ribs extending into the inner space of an accommodation seat, configured to interact with an inserted pipettor consumable.

A pipettor consumable in the context of the present invention comprises a plug-on aperture at a proximal end, with which the consumable is mounted to the fitting end of a pipettor. The plug-on aperture is configured concerning its dimensions and material to be directly (e.g. tightly) mounted to the pipettor, or an adapter, so that, when the pipettor is moved, the pipettor consumable is moved as a unit together with the pipettor.

Depending on the plug-on partner of the pipettor consumable, the proximal end and the plug-on aperture may be designed differently to ensure a stable connection.

Furthermore, the pipettor consumable comprises a functional element at a distal end. Depending on the function, the structure of at the distal end is different.

Known pipettor consumables are, among others and as described below, for example pipette tip attachments for treating a defined area of interest on a tissue slice, transport tools having e.g. a clamping mechanism for laboratory articles to be transported, or disposable pipette tips.

A pipette tip extension is for example known from published patent application WO 2020/132394 A1 of the present applicant and is configured being mounted onto a pipette tip. A transport tool is for example known from the patents EP 2 913 678 B1 and EP 2 913 677 B1 of the present applicant. Disposable pipette tips are widely known in the art from various producers, in various sizes; exemplarily, an overview of disposable pipette tip of the present applicant may be found under https://lifesciences.tecan.com/multichannel-arm-96-disposable-tips.

In an embodiment of the invention, which may be combined with any other of the embodiments which where or will be mentioned, unless there is a contradiction, the array of the accommodation seats in the storage plate is chosen based on the pipettor consumable and the desired use thereof in a liquid handling system.

For example, in case the pipettor consumables needs to be presented to a multi-pipettor head of a liquid handling system, and multiple pipettor consumables shall be picked up by a multitude of pipettors at the same time, it is particularly advantageous that the pipettor consumables are already stored in the storage device in a mirror-inverted array as they shall be presented later to the pipetting head. It is particularly suitable that the array of the pipettor consumable corresponds to a mirror-inverted array of wells of a standard microplate ("ANSI SLAS 4-2004 (R2012), For microplates - Well positions), because pipettors of a pipetting head are often arranged in an array corresponding to the array of wells of a standard microplate.

In an alternative embodiment, the array of accommodation seats for storing the pipettor consumables does not need to be dependent of the array of wells of a standard microplate. This may be provided in the case when the pipettor consumable shall be picked up by individual pipettors. For example, the accommodation seats may be organized in columns and rows, which are mutually offset against each other. This may be suitable for example in case a single pipettor consumable, such as a pipette tip attachment or a transport tool shall be used. Arrays deviating from rows and columns are however possible, too.

In an embodiment of the invention, which may be combined with any other of the embodiments which where or will be mentioned, unless there is a contradiction, the accommodation seats are arranged in an array corresponding to an array or a part of an array of wells of a standard multi-well plate.

In this embodiment, the array of accommodation seats in the storage plate is coupled to an array of wells of a standard microplate e.g. of a 6, 24, 48, 96, 384 or 1426 well microplate.

In an embodiment of the invention, which may be combined with any other of the embodiments which where or will be mentioned, unless there is a contradiction, the storage device comprises at least two positioning elements which extend away from the upper side. At least one of the positioning elements is configured as a two-part wing. Each of the two wing-parts enclose an edge being in alignment with an edge formed by a longitudinal side and a transverse side of the storage device at the upper side.

In this embodiment, the positioning element extends upwards of the storage device, for providing a positioning function towards a carrier and/or towards another storage device to be stacked above. By overtopping the upper side of the storage plate, the positioning element may interact with a corresponding complementary structure on a carrier or on an additional storage device, when positioned on the upper side of the storage plate. By the interaction, the positioning elements may guide the carrier or storage device into the desired position. The wing-parts at the corners of the storage plate may abut the corresponding corner of a carrier or another storage device. It may be provided that the two win-parts are arranged at an essentially right angel to each other, thereby enclosing an edge.

The interaction may be based for example on a form-fit-interaction, or additionally or alternatively on a friction-fit interaction, or any other type of suitable interaction.

It may be provided that the storage device comprises four positioning elements. It may be provided that the positioning elements of one storage device are equally configured. It may be provided that the positioning elements are arranged at positions on the storage device to interact with corresponding complementary structures of a carrier and/or of another storage device to the stacked. The positioning elements may be adapted to interact with general structures of a carrier, or to interact with specifically foreseen, complementary structures on a carrier.

In an embodiment of the invention, which may be combined with any other of the embodiments which where or will be mentioned, unless there is a contradiction, at least one of the positioning elements is configured as a cylindrical hollow pin which extends from the upper side of the storage plate towards a bottom side of the storage plate. The hollow pin is here arranged at an edge, or alongside an edge, respectively, formed by a longitudinal side and a transverse side of the storage device.

In this embodiment, the positioning element extends alongside the height of the storage plate, for example parallel to a longitudinal axis of the storage device.

It may be provided that the pin is configured being cylindrical and hollow.

It may be provided that such positioning elements are configured as stacking elements, in that based on the configuration, the end of one hollow pin reaches into the aperture of a corresponding hollow pin of a storage device positioned below, thereby not only guiding a storage device into a desired stacking position, but further stabilizing the resulting stack.

In an embodiment of the invention, which may be combined with any other of the embodiments which where or will be mentioned, unless there is a contradiction, the storage device comprises a stop surface at the upper side.

The stop surface at the upper side serves as a structure abuttable for example by an upper side of a carrier, when the carrier is positioned in the face-to-face orientation on the storage device.

It is possible that the stop surface is provided by two or more ribs arranged on the upper side of the storage device. Such ribs may be adjusted concerning for example the height to the upper surface of a carrier, for compensating uneven surface areas of a carrier or the storage device. This helps compensating a certain warpage of one of the carriers or the storage device and may reduce a possible wobbling when the storage device and a carrier rest on each other. Alternatively, or additionally, other elements than ribs may provide a stop surface on the upper side of the storage device for a face-to-face interaction with a carrier.

In an embodiment of the invention, which may be combined with any other of the embodiments which where or will be mentioned, unless there is a contradiction, the storage device comprises a stop surface at the bottom side.

The stop surface at the bottom side helps improving the stacking of two or more storage devices one above another. Such a stop surface at the bottom of a storage device is abuttable by an upper side of another storage device when generating a stack. It may be provided that the stop surface is configured to interact with distinct structures at the upper side of the other storage device.

The stop surface at the bottom of the storage device may be provided for example by a circumferential bottom edge on the lower side of the storage plate or of the storage device, or by additional elevations at the lower side of the storage device.

In an embodiment of the invention, which may be combined with any other of the embodiments which where or will be mentioned, unless there is a contradiction, the storage device comprises two or more stacking elements.

It may be provided that one or more of the stacking elements is positioned at an edge formed by a longitudinal side and an adjacent transverse side of the storage device.

It may be provided that the storage device comprises one stacking element in each edge of the storage device.

Alternatively, or additionally, it may be provided that one or more of the stacking elements are arranged on the upper side of the storage device, configured to interact with a complementary stacking element (or a complementary positioning element) on the lower side of a storage device to be stacked above.

Alternatively, or additionally, it may be provided that one or more of the stacking elements are arranged on the lower side of the storage device, respectively, configured to interact with a complementary stacking element (or a complementary positioning element) on the upper side of a storage device to be stacked below.

In an embodiment of the invention, which may be combined with any other of the embodiments which where or will be mentioned, unless there is a contradiction, one or each of the stacking elements are conical tapered tubes with a fitting aperture at the upper side of the storage plate, and a distal end at the bottom side.

In an embodiment of the invention, which may be combined with any other of the embodiments which where or will be mentioned, unless there is a contradiction, the distal end of a stacking element is configured to interact with a positioning element of a storage device positioned below, or the distal end of a stacking element is configured to interact with a fitting aperture of a stacking element of a storage device positioned below.

In an embodiment of the invention, which may be combined with any other of the embodiments which where or will be mentioned, unless there is a contradiction, the storage device comprises one positioning element and/or one stacking element on each edge formed by a longitudinal side and a transverse side.

In an embodiment of the invention, which may be combined with any other of the embodiments which where or will be mentioned, unless there is a contradiction, the storage device comprises at least one pipettor consumable. The pipettor consumable is positioned in an accommodation seat. The pipettor consumable may be selected from a group comprising a pipette tip, a pipette tip attachment, a transport tool, a gripper tool, a suction cap tool, a reaction tool, a plating tool for bacteria or other tools comprising a plug-on aperture at the proximal end for being attachable to a pipettor or to a pipette tip and comprising a functional element at the distal end.

Suitable pipettor consumables comprise a plug-on aperture at the proximal end, with which the pipettor consumable is attachable directly or indirectly to a pipettor. Suitable pipettor consumable may comprise - depending on their function - different functional elements at their distal end, which is typically opposite to the proximal end with the plug-on aperture.

In case of a pipette tip, the functional element at the distal end is a dispense aperture, through which a liquid may be aspirated or dispensed. A pipette tip may be directly mounted onto a pipettor and provides a liquid channel.

In case of a pipette tip attachment, the functional element at the distal end is a complex structure for generating a liquid flow over an isolated area of a sample surface. A pipette tip attachment may be indirectly mounted onto a pipettor, in that it is mounted onto a distal end of a pipette tip, extending the liquid channel.

In case of a transport tool, the functional element at the distal end is an article holder, for example a spherical head with which the transport tool may be connected by a friction fit to a laboratory article. After being connected, the laboratory article may be transported by means of the pipettor.

In case of a gripper tool, the functional element at the distal end is a gripping mechanism, with which an article (e.g. a microplate) may be gripped and transported.

In case of a suction cap tool, the functional element at the distal end is a suction cap, which may be used to connect to specific articles (e.g. a microplate lid) for transportation.

In case of a reaction tool, the functional element at the distal end may be fluid reservoir which provides reactive reagents. Upon the uptake of a liquid with the aid of a pipettor, the liquid, or a sample therein, is brought in contact with the reactive reagent. By way of example, it may be provided that a reaction tool is configured for carrying out a solid phase extraction.

In case of a plating tool for bacteria, the functional element at the distal end is a structure with which for example a liquid comprising bacteria or other microorganism may be distributed on an agar plate. A suitable structure is for example a spatulate form, an ovate form or an elliptic form, for avoiding damaging the agar surface during the distribution.

In an embodiment of the invention, which may be combined with any other of the embodiments which where or will be mentioned, unless there is a contradiction, the storage device comprises at least one pipette tip attachment. The pipette tip attachment comprises a proximal end, a distal end and an exterior wall. The exterior wall forms at the proximal end a pipette tip reception aperture (the plug-on aperture), at the distal end a dispense aperture, and encloses an inner cavity for receiving a pipette tip. Each accommodation seat is configured to reversibly hold a pipette tip attachment in an upside-down orientation.

A further aspect of the invention concerns a storage assembly comprising two or more storage devices according to one of the previous described embodiments or combinations thereof. A first storage device is stacked onto another storage device, thereby forming a stack. It may particularly be provided that the stacking of the two or more storage devices is supported by one or more stacking elements and/or one or more positioning elements as described above, and/or by a stop surface.

It may further be provided that one or more of the storage devices which are stacked carry a pipettor consumable in one or more accommodation seats. Particularly, the storage devices in one storage assembly carry the same type of pipettor consumable.

A further aspect of the invention concerns a presentation assembly comprising a storage device according to one of the previously described embodiments, and a carrier. The carrier comprises a carrier plate with an upper side, a bottom side and a plurality of presentation seats on the upper side of the carrier plate. The number of presentation seats of the carrier corresponds to the number of accommodation seats of the storage device. The presentation seats are arranged in an array which is mirror-inverted to the array of the accommodation seats on the upper side of the storage device. In particular, it may be provided that the array of presentation seats corresponds to an array of wells of a standard microplate.

It is desired that the carrier and the storage device are mutually adapted to each other, concerning the dimensions, the number and arrangement of presentation and accommodation seats, and the structures for mutually positioning the storage device and the carrier face-to-face, to ensure the transfer of the pipettor consumable(s) which is stored in an upside-down orientation in the storage device, into the use-orientation in the carrier.

A carrier concerns a presentation place for presenting one or more pipettor consumables to a pipettor, for example of a liquid handling system.

In an embodiment of the presentation assembly, which may be combined with any other of the embodiments which where or will be mentioned, unless there is a contradiction, the storage device, with the upper side of the storage plate, abuts with the upper side of the carrier, so that opposite to each accommodation seat of the storage device, one presentation seat of the carrier is positioned.

In an alternative embodiment, the number of presentation seats of the carrier and the number of accommodation seats in the storage device deviate from each other. However, the smaller number of seats fits into the pattern of the higher number of seats, so that opposite to the smaller number of seats, one seat of the corresponding higher number of seats is positioned.

In an embodiment of the presentation assembly, which may be combined with any other of the embodiments which where or will be mentioned, unless there is a contradiction, each position element of the storage device is configured to act onto the carrier in a position-specific manner for bringing the accommodation seats and the presentation seats into a congruent position.

In an embodiment of the presentation assembly, which may be combined with any other of the embodiments which where or will be mentioned, unless there is a contradiction at least one of the positioning elements, preferably each of the positioning elements is configured as a two-part wing, with the wing-parts enclosing an edge formed by a longitudinal side and a transverse side of the storage plate at the upper side.

For bringing the accommodation seats and the presentation seats into a congruent position to each other, each two-part wing is configured to enclose an edge of the carrier plate generated by a longitudinal side and an adjacent transverse side of the carrier plate. It may be provided that the two wing-parts are arranged at a right angel to each other, enclosing the edge formed by a longitudinal side and a transverse side of the storage plate.

By enclosing the corresponding edges of the carrier, the position element guides the storage device into the desired position towards the carrier. As discussed above, it may particularly be provided that the storage device comprises two or more positioning elements, which may additionally help to avoid a shifting out of place of the storage device, and the carrier are placed onto each other in the face-to-face-position.

In an embodiment of the presentation assembly, which may be combined with any other of the embodiments which where or will be mentioned, unless there is a contradiction, at least one of the positioning elements, preferably each of the positioning elements is configured as a complementary reception for generating a form fit connection with a complementary positioning element on the upper side of the carrier.

In an embodiment of the presentation assembly, which may be combined with any other of the embodiments which where or will be mentioned, unless there is a contradiction, the carrier has a footprint which essentially corresponds to the footprint of a standard microplate, or which essentially corresponds to a part of the footprint of a standard microplate.

This embodiment is particularly suitable for being used in a liquid handing system. Such liquid handling systems may provide defined positions for placing a standard microplate and addressing distinct wells with one or more pipettors in an automated manner. When the carrier is placed onto such a position which is intended for a standard microplate, this allows addressing the carrier, specifically the stored pipettor consumable with one or more pipettors, in a corresponding automated manner.

It may be provided that a carrier has the size of a standard microplate concerning the footprint in case a larger number of pipettor consumables shall be presented. In case a smaller number of pipettor consumables shall be presented to a pipettor in a liquid handling system, it may be provided for example that the carrier has a footprint which corresponds to essentially the half of a footprint of a standard microplate. It may be provided in this case that the footprint of the carrier is not exactly half of the footprint but is dimensioned slightly smaller, to allow for example positioning structures of a storage device to project sidewise of the carrier.

A further aspect of the invention concerns a method of stacking two of more storage devices in embodiments as described above or in a combination of such embodiments. In the method concerned, a first storage device is stacked onto the other storage device, thereby forming a storage assembly. It is provided that the stack is stabilized by the positioning elements and/or the stacking elements of one storage device which interact with the positioning elements and/or stacking elements of the other storage device.

It may further be provided that that stack is stabilized by the stop surface(s) at the bottom of one of the storage device abutting the lower storage device in the stack. Such stop surface may reduce a wobbling effect which may result by warpage of the storage plate or storage device.

A further aspect of the invention concerns a method of presenting a stored pipettor consumable to a pipettor. The method comprises the following steps:
Providing a storage device according to one of the embodiments or combination of embodiments described above. The storage device comprises a pipettor consumable in an accommodation seat of the storage device. The pipettor consumable comprises a proximal end with a plug-on aperture, and a distal end with a functional element. It is provided that the pipettor consumable rests in an accommodation seat of the storage device in an upside-down orientation, in which the proximal end of the pipettor consumable abuts the bottom of the accommodation seat, while the distal end of a pipettor consumable faces away from the support bottom.

Providing a carrier in an embodiment or a combination thereof as described herein. The carrier comprises a carrier plate with an upper side, a bottom side and a plurality of presentation seats on the upper side. The number of presentation seats correspond to the number of accommodation seats of the storage device. Furthermore, the presentation seats are arranged in an array which is mirror-inverted to the array of the accommodation seats on the upper side of the storage device.

In case one type of seats is a subset array of the other type of seats, the seat pattern of the subset array fit onto the array of the other type of seats.

Generating an assembly by abutting the storage device with the upper side onto the upper side of the carrier plate and bringing the accommodation seats of the storage device in alignment with the presentation seats of the carrier by use of the one or more positioning elements and/or by use of the one or more stacking elements of the storage device as described herein. By this, an assembly of the storage device comprising at least one pipettor consumable and the carrier is generated.

Turning the carrier with the assembly in an upright position. By this, the pipettor consumable is moved from the accommodation seat of the storage plate into the presentation seat of the carrier, to rest in the presentation seat of the carrier.

Removing the storage device from the carrier while the pipettor consumable remains in the presentation seat of the carrier. In the presentation seat the pipettor consumable rests with the plug-on aperture being accessible for a pipettor. In particular, the distal end of the pipettor consumable now faces towards the bottom side of the carrier while the plug-on aperture faces towards the upper side of the carrier.

For a pipettor assessing the pipettor consumables presented in the carrier, the carrier is placed on the worktable of the liquid handling system.

In an embodiment of the method, the pipettor consumable is selected from a group comprising a pipette tip, a pipette tip attachment, a transport tool, a gripper tool, a suction cap tool, a reaction tool, a plating tool for bacteria or other tools comprising a plug-on aperture (24) at the proximal end for being attachable to a pipettor or to a pipette tip and comprising a functional element at the distal end.

It is provided that the storage device and the carrier are adapted to the pipettor consumable which shall be stored and presented. In particular, the dimension of accommodation seats and presentation seats, their number and their arrangement in the storage plate and the carrier plate, respectively are adapted to the dimensions of the pipettor consumable.

In an embodiment of the method, the pipettor consumable is a pipette tip attachment. A pipette tip attachment is mounted on a pipettor indirectly, in that after removing the storage device from the carrier, a pipette tip, which is coupled to a pipettor is inserted into the plug-on aperture of the pipette tip attachment presented by the carrier.

In an embodiment of the method, the pipettor consumable is configured being directly mountable to a pipettor. For example, the pipettor consumable is a transport tool described herein. After mounting the transport tool to the pipettor, the transport tool is moved to a laboratory article such as a microplate and coupled thereto by means of the article holder. Afterwards, the laboratory article may be for example removed by moving it via the coupled pipettor to a waste.

The features of the above-mentioned embodiments of the device can be used in any combination, unless they contradict each other.

### BRIEF DESCRIPTION OF THE DRAWINGS

Embodiments of the current invention are described in more detail in the following with reference to the figures. These are for illustrative purposes only and are not to be construed as limiting. It shows
- Fig. 1: a three-dimensional schematic view onto an upper side of an exemplary embodiment of a storage device;
- Fig. 2: a three-dimensional schematic view onto a distal end of an exemplary embodiment of a pipettor consumable;
- Fig. 3: a three-dimensional schematic view onto a proximal end of the pipettor consumable of Fig. 2;
- Fig. 4: a three-dimensional schematic view onto a bottom side of the storage plate of Fig. 1;
- Fig. 5: a three-dimensional schematic view onto an upper side of a further exemplary embodiment of a storage device;
- Fig. 6: a three-dimensional schematic view onto the bottom side of the storage device of Fig. 5;
- Fig. 7: a three-dimensional schematic view onto a distal end of another exemplary pipettor consumable;
- Fig. 8: a three-dimensional schematic view onto a proximal end of the pipettor consumable of Fig. 7;
- Fig. 9: a schematic top view onto the upper side of a storage device of Fig. 5;
- Fig. 10: a schematic view onto the bottom side of the storage device of Fig. 5;
- Fig. 11: a three-dimensional schematic view onto a further exemplary embodiment of a storage device;
- Fig. 12: a three-dimensional schematic sectional drawing of a storage device of Fig. 11;
- Fig. 13: a sectional drawing of a storage device with inserted pipette tip attachments;
- Fig. 14: a sectional drawing of another storage device with inserted pipette tip attachments of a different type;
- Fig. 15: a schematic cross sectional view of an exemplary pipettor;
- Fig. 16: a schematic, front view of an exemplary pipettor consumable;
- Fig. 17: a schematic, three-dimensional view of two different pipettor consumables attached to each other;
- Fig. 18: a schematic, three-dimensional view of two different pipettor consumables in different embodiments;
- Fig. 19: a three-dimensional schematic view onto a carrier in an exemplary embodiment;
- Fig. 20: the schematic view of Fig. 19 with inserted pipettor consumables;
- Fig. 21: a schematic, three-dimensional view of a carrier of Fig. 19 being cut through a row of presentation seats;
- Fig. 22: a cross sectional view of a carrier of Fig. 19 with inserted pipettor consumables;
- Fig. 23: a schematic overview of different method steps for presenting a number of pipette tip attachments;
- Figs. 24: a schematic overview of a storage device and carrier positioned face-to-face;
- Figs. 25: a schematic overview of the carriers of Fig. 24 with a pipette tip;
- Fig. 26: a schematic of different embodiments of a storage device and carrier positioned face-to-face;
- Fig. 27: a schematic overview of the carrier of Fig. 26 with a pipette tip;
- Fig. 28: a schematic overview of method steps for presenting a number of pipettor consumables by a storage device and carrier of different embodiments;
- Fig. 29: a schematic overview of two storage devices in an exemplary embodiment about to be stacked;
- Fig. 30: a schematic overview of a stack of storage devices of Fig. 29
- Fig. 31: a schematic overview of two storage devices in a different embodiment about to be stacked;
- Fig. 32: a schematic overview of a stack of storage devices of Fig. 31.

### DETAILED DESCRIPTION OF THE INVENTION

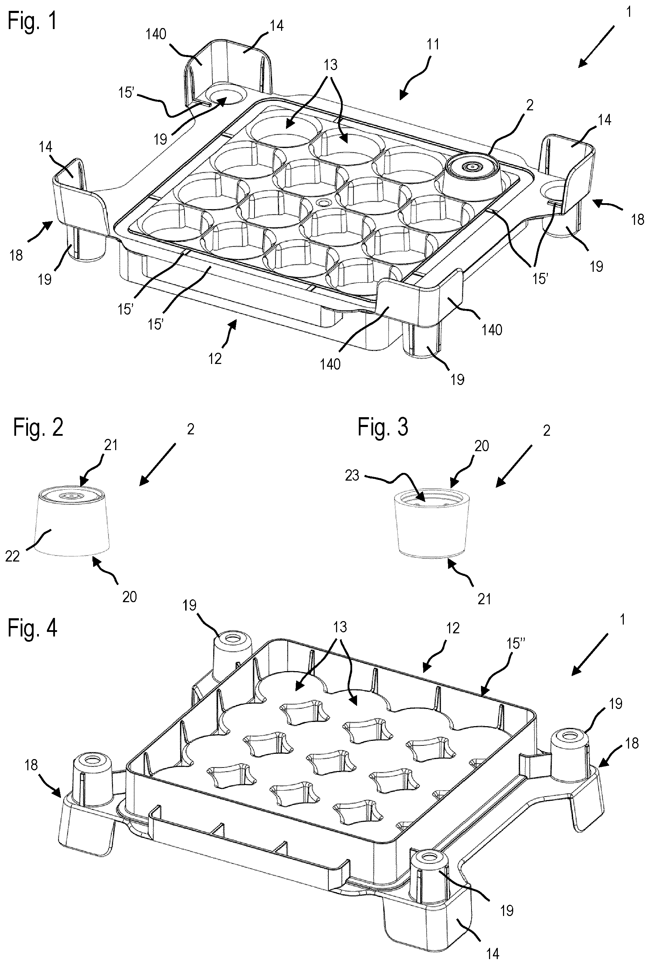

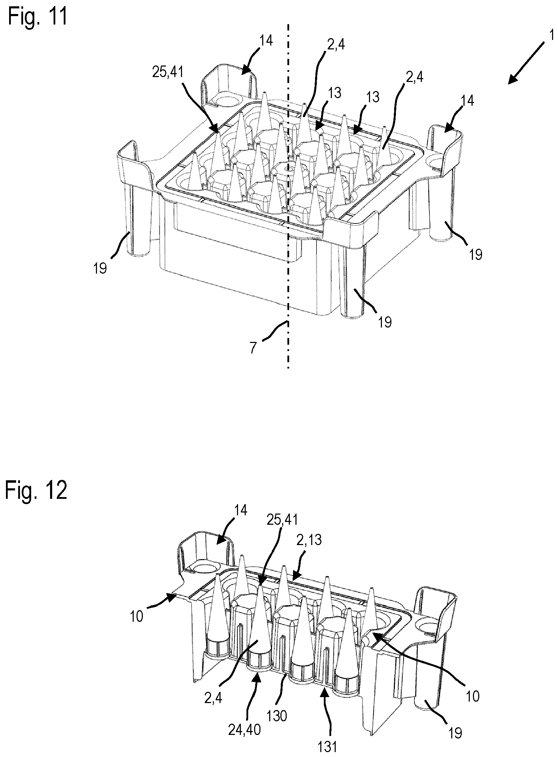

Figure 1 shows a three-dimensional schematic view onto an upper side 11 of an exemplary embodiment of a storage device 1. The storage device 1 comprises a storage plate 10 (see Fig. 11), into which a number of accommodation seats 13 are inserted in an array of rows and columns. In one of the accommodation seat 13, a pipettor consumable 2 is placed in an upside down orientation. On the upper side, a number of stop surfaces 15' are arranged. In this embodiment, the stop surfaces 15' are a number of ribs arranged at various positions on the upper side 11. The ribs may be abuttable for example by a carrier and shall reduce a wobbling when the storage device and/or the carrier are warped.

At each corner 18 of the storage device 1, a position element 14 in the form of two wing-parts 140 is arranged. The wing-parts 140 enclose one corner 18 in a notional prolongation, thus, the protrude over the upper side 11.

Below each positioning element, a stacking element is provided which in this case has the form of a hollow tube extending from the upper side 11 to the bottom side 12. The opening of the hollow tube faces to the upper side 11.

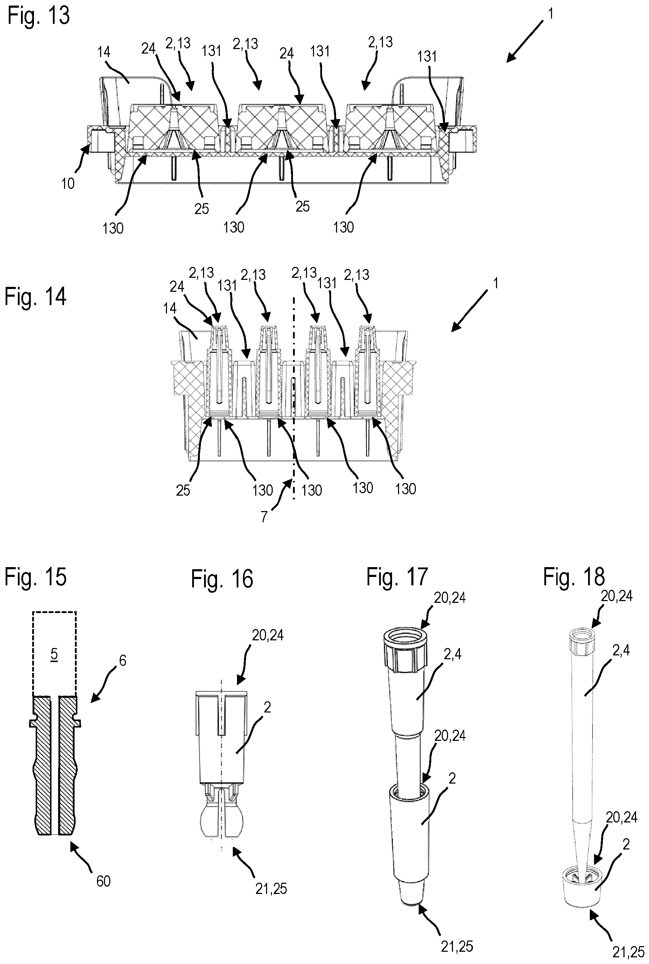

Figure 2 shows a three-dimensional schematic view onto a distal end 21 of an exemplary embodiment of a pipettor consumable 2. In this embodiment, the pipettor consumable is a pipette tip attachment. A flat guiding plate can be seen which is inwardly displaced. With the distal edge, the pipette tip attachment may be placed for example onto an area of interest of a tissue section (not shown). With the proximal end 20, as it can be seen in Figure 3, the pipette tip attachment may be mounted onto a disposable pipette tip 4 (compare Fig. 16). A liquid, which is dispensed by a pipette tip, is guided through an inner cavity 23 of the pipette tip attachment to the distal end, where the liquid is guided over the guiding plate to fluid uptake areas at the inner side of the external wall.

Figure 4 shows a three-dimensional schematic view onto a bottom side 12 of the storage device 1 of Figure 1. The accommodation seats 13 can be seen from the bottom side, too, as well as the stacking elements 19 at the four corners 18 of the storage device 1. The hollow tubes are open at the bottom.

A stop surface 15'' at the bottom side 12 extends around the array of accommodation seats 13. This stop surface 15'' serves as a supporting surface when the storage device 1 is positioned above another storage device 1 (not shown). The array of accommodation seats is enclosed by additional structures which carry the positioning elements 14 and the stacking elements (compare also Fig. 1).

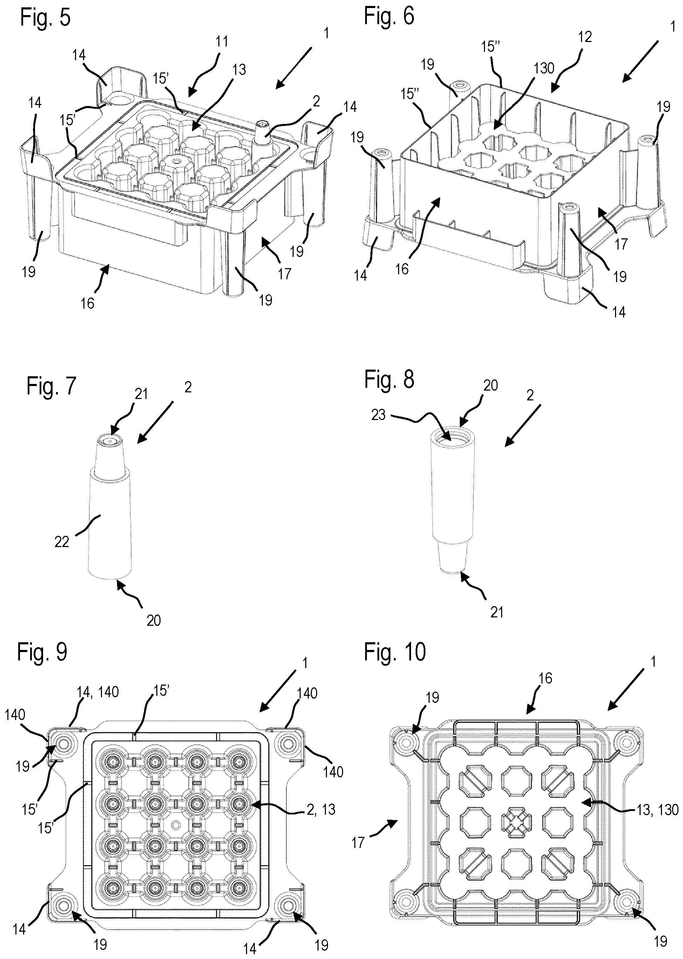

Figure 5 shows a three-dimensional schematic view onto an upper side 11 of a further exemplary embodiment of a storage device 1. In this embodiment, the accommodation seats 13 are configured being significantly lower compared to the accommodation seats 13 of a storage device 1 shown in Figure 1. The accommodation seats 13 of a storage device 1 of Figure 5 are suitable to receive and store pipettor consumables 2 which are longer. The single pipettor consumable 2 shown in Figure 5 is placed within the storage device 1 in an upside down orientation, with the distal end 21 (compare to Fig. 7) facing away from the upper side 11 of the storage device 1. Accordingly, the storage device shown in Figure 5 has a greater height.

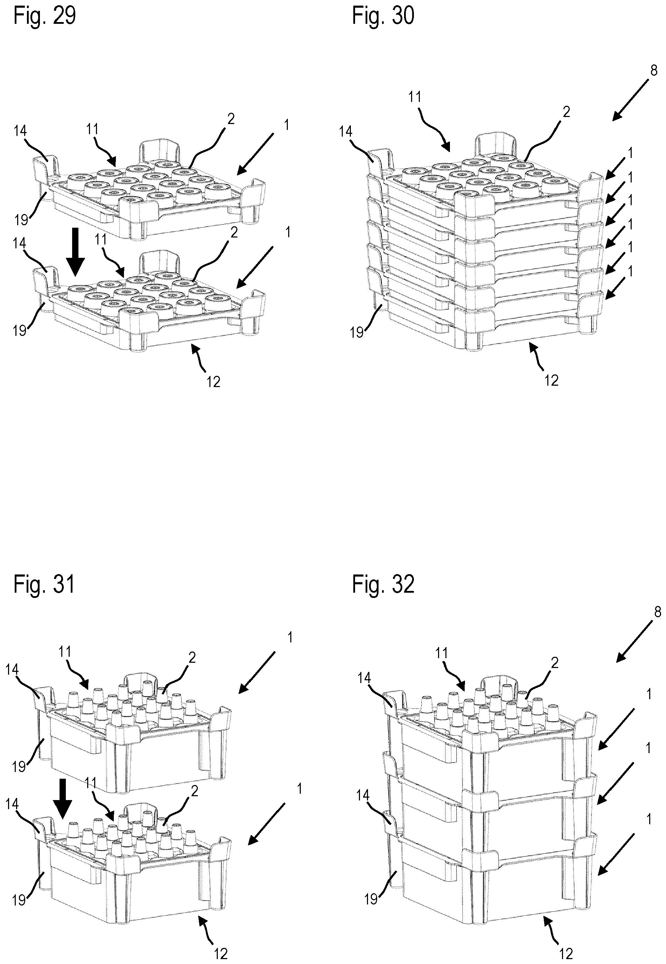

In the embodiment shown, the positioning elements 14 are configured according to the embodiment shown in Fig. 1. However, the stacking elements 19 are adapted to the height of the storage device 1, thus, they are longer, extending from the upper side 11 to the lower side 12. The positioning elements 14 and the stacking elements 19 are configured to interact with each other when the storage device 1 is stacked with another storage device (compare Fig. 29 and 30.

Figure 6 shows a three-dimensional schematic view onto the bottom side 12 of the storage device 1 of Fig. 5. The stop surface 15'' at the bottom side 12 is provided here by circumferential side walls which essentially define the height of the storage device 1. These side walls are part of the longitudinal side 16 and transverse side 17 of the storage device 1, forming the four corners 18 where here, the positioning elements 14 and stacking elements 19 are located.

Depending on the length of the pipettor consumable 2 to be stored, the accommodation seats 13 may even be configured deeper than shown in Figures 5 and 6.

Figure 7 shows a three-dimensional schematic view onto a distal end 21 of another exemplary pipettor consumable 2. However, also this pipettor consumable 2 is a pipette tip attachment but configured covering a different size of an area of interest compared to the pipette tip attachment shown in Figures 3 and 4. Both embodiments have a guiding plate at the distal end 21 in common, which guides a liquid to the areas adjacent the inner side of the external wall. Both have further in common that the proximal end 20 (see Figure 8) is configured receiving a pipette tip (compare to Figure 15), which is inserted into the inner cavity 23. In this case, a pipette tip 4 functions as a connector for the pipette tip attachment to be mounted onto a pipettor 6.

Figure 9 shows a schematic top view onto the upper side 11 of a storage device 1 of Figure 5. It is visible here that each accommodation seat 13 is locally separated from the other accommodation seats 13, however, each accommodation seat 13 is not a self-contained reception. The rows and columns of the array of accommodation seats 13 are visible, too.

In each accommodation seat 13 rests a pipettor consumable 2, in this case a pipette tip attachment shown in Figures 7 and 8. The accommodation seats 13 are configured to hold a single pipettor consumable in a concentric manner.

The wing-parts 140 of the positioning element enclose the corner 18 of the storage device 1. As they protrude from the upper side 11 (see Figure 5), they may further enclose an edge of a correspondingly adapted carrier.

Figure 10 shows a schematic view onto the bottom side of the storage device of Figure 5. Visible here are the additional stabilising structures for example at the outer side of the longitudinal side 16. The support bottom 130 of the accommodation seats 13 is visible as well. It can be seen that in this embodiment, the support bottom 130 is a continuous bottom.

Figure 11 shows a three-dimensional schematic view onto a further exemplary embodiment of a storage device 1. The storage device 1 shown is configured to receive a different type of pipettor consumable 2 in the accommodation seats 13, which is in this case are disposable pipette tips 4. Each of the accommodation seats 13 is occupied by one pipette tip 4. The functional element 25 of the pipette tip 4 at the distal end 41 points upwardly. Four stacking elements 19 extend along the height of the storage device 1 and essentially parallel to a longitudinal axis 7 of the storage device 1. Furthermore, four positioning elements 14 are arranged essentially in alignment with the stacking elements 19.

In Figure 12, a three-dimensional schematic sectional drawing of a storage device 1 of Fig. 11 is shown. In this view it can be seen that the pipette tip 4 rests with the plug-on aperture 24 at the proximal end 40 on the support bottom 130 of an accommodation seat 13. In this orientation, the functional element 25 at the distal end 41, which is in the case of a pipette tip the dispense aperture, points upwardly. Each of the pipette tips 4 are surrounded by a lateral support 131.

The storage device 1 shown is configured to receive a distinct size of disposable pipette tips 4. Depending on the type (in particular on the size) of pipette tips, the storage device 1 is adapted e.g. concerning the dimensions and/or dimensions of the accommodation seats 13. In particular, the height of the lateral supports 131 and the size of the support bottom 130 may be adapted to provide a stable seat of the pipette tips 4.

Figure 13 shows a schematic sectional drawing of a storage device 1 with pipette tip attachments 2 inserted into accommodation seats 13. In this embodiment, the storage device 1 comprises in the row which is shown cut three accommodation seats 13. It can be seen that the pipette tip attachments rest on the support bottom 130 of the storage plate 10. It can further be seen that sideways, a pipette tip attachment slightly abuts a lateral support 131, so that the single pipette tip attachments are separated from each other.

In this sectional drawing, the inner structure of a pipette tip attachment shown in Figures 3 and 4 is further revealed. As mentioned before, the pipette tip attachment rests on the support bottom 130 with the proximal side, where the plug-on aperture 24 is situated (compare also with Fig. 18). At the distal end facing away from the support bottom 130, the guiding plate and the gap towards the distal end of the pipette tip attachment is visible. An inner sleeve constricts the insertion depth of a pipette tip.

Figure 14 shows a sectional drawing of another storage device 1 with inserted pipette tip attachments according to Figures 5 to 8. Again, and according to the invention, the pipette tip attachment rests in an upside down orientation on the support bottom 130 of the accommodation seat 13, so that the plug-on aperture 24 at the proximal end 20 of the pipette tip attachment abuts the surface of the support bottom 130. The lateral support 131 is larger compared to the lateral support of a storage device 1 shown in Figure 11.

Also here, a more detailed view of the inner structure of a pipette tip attachment as a form of a pipettor consumable 2 is revealed. A gap at the distal end 21 is formed here as well. In addition, a rib can be seen in a frontal view, which stabilises an inserted pipette tip in the inner cavity 23. For a better overview, the longitudinal axis 7 of the storage device is indicated.

Figure 15 shows a schematic cross-sectional view of an exemplary pipettor 6. Typically, a pipettor 6 comprises a fitting end 60 which is configured to receive a pipette tip for pipetting a liquid. Other pipettor consumables 2 are known, too, to be attachable to a pipettor 6, providing a different function that a pipette tip, and are discussed herein.

A particularly suitable pipettor 6 for the present invention is functionally connected to a liquid handling system 5, typically with an end opposite to the fitting end 60. The connection to a liquid handling system is indicated in this Figure by the dashed lines. For the automated handling of liquids, the liquid handing system 5, including the pipettor 6, is under the control of a control unit (not shown). Typical actions for a pipettor 6 are the mediation of liquid aspiration and dispensation of liquids provided at different places on a worktable in a liquid handling system 5. For this, the pipettor 6 is not only movable in a vertical direction but additionally in a horizontal direction. The movability of a pipettor under the control of a control unit further allows an automation of other processes such as the transfer of laboratory articles or even certain individual processes such as the treatment of defined areas on a sample surface or the plating of microorganism, as presented herein.

Figure 16 shows a schematic, front view of an exemplary pipettor consumable 2, which is in this case configured as a transport tool. The transport tool comprises at the proximal end 20 a plug-on aperture 24, with which it is mounted onto the fitting end 60 of the pipettor 6. At the distal end 21, the transport tool comprises a spherical article holder, which is adapted to be inserted for example into a well of a microplate in a friction-fit manner. The transport tool does not provide a liquid channel, but merely is used as an adapter piece which allows the transportation of laboratory articles by means of a pipettor 6.

Fig. 17 shows a schematic, three-dimensional view of two different pipettor consumables 2 attached to each other in this special case. In particular, a disposable pipette tip 4 and a pipette tip attachment shown in Figure 7 and 8 are shown. The disposable pipette tip 4 is mountable with the plug-on aperture 24 to the fitting end 60 of a pipettor 6, while the pipette tip attachment is indirectly connectable to a pipettor 6 in that it is mounted with its plug-on aperture 24 to the distal end of a pipette tip 4.

Figure 18 shows a schematic, three-dimensional view of two different pipettor consumables analogously to Figure 15, but in different embodiments. Here, another type of disposable pipette tip 4 and a pipette tip attachment shown in Figures 3 and 4 are shown. Also this assembly may be mounted to a pipettor 6 in that the pipette tip 4 is mounted with its plug-on aperture 24 to the fitting end 60 of a pipettor 6, thereby indirectly connecting the pipette tip attachment to the pipettor 6.

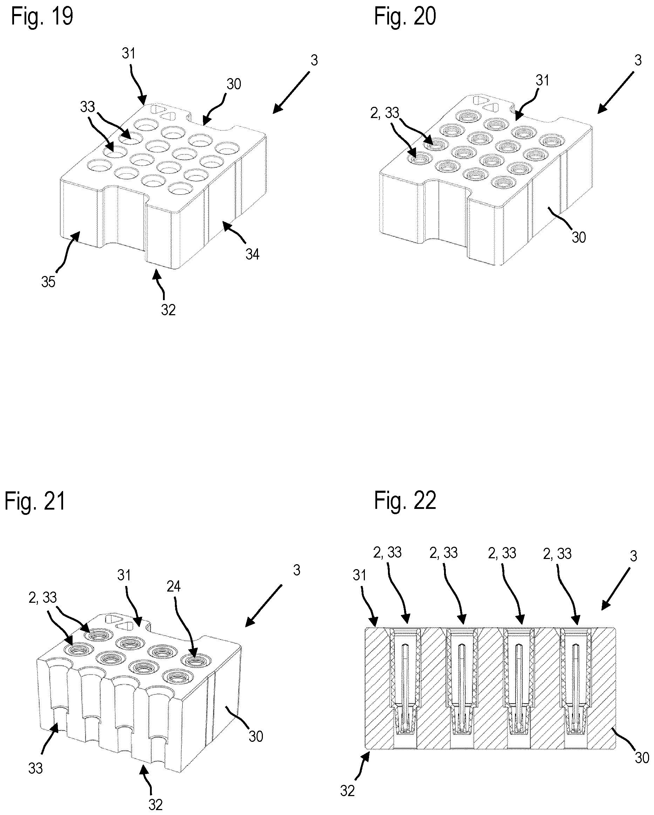

Figure 19 shows a three-dimensional schematic view onto a carrier 3 in an exemplary embodiment. The carrier 3 comprises a carrier plate 30, into which a number of presentation seats 33 are embedded. The openings of the presentation seats 33 face towards the upper side 31. The presentation seats 24 are arranged here in an array of 4 x 4. The position of in this case of the first and fourth presentation seat 33 correspond to the position of a well of a 96 standard microplate. This allows the addressing of pipettor consumables in an automated manner, when they are presented in the presentation seats 33. The situation of the carrier 3 being filled with corresponding pipettor consumables 2, in this case pipette tip attachments, is shown exemplarily in Figure 20. The movement of a pipettor 6 to pick up a pipette tip attachment may in this case be based on the same movement control of the pipettor 6 to pick up a pipette tip 4 for carrying out a pipetting action.

Figure 21 shows a schematic, three-dimensional view of a carrier 3 of Figure 19 being cut through a row of empty presentation seats 33, while the two rows behind are filled with corresponding pipette tip attachments. In this embodiment shown, the presentation seats 33 are through openings extending from the upper side 31 to the lower side 32 of the carrier plate 31. In any case, the inside form of the presentation seats 33 is adapted to the outside form of the pipettor consumables 2 to be presented towards a pipettor 6. Also, in any case, the form of the presentation seats 33 is configured to carry the respective pipettor consumable in the normal orientation, to present the plug-on aperture 24 at the upper side 31. Furthermore, the form is configured to carry the respective pipettor consumable while allowing the pick-up by the pipettor 6.

Figure 22 shows a view of a cross section through a carrier of Figure 17 with inserted pipettor consumables. The adaptation of the inner form of the configuration seats 33 to the outer dimensions of the pipettor consumables 2 is visible in this view. The configuration as through openings has the advantage of providing a pressure equalization when the pipettor consumable 2 is inserted into or pulled out of the presentation seat 33.

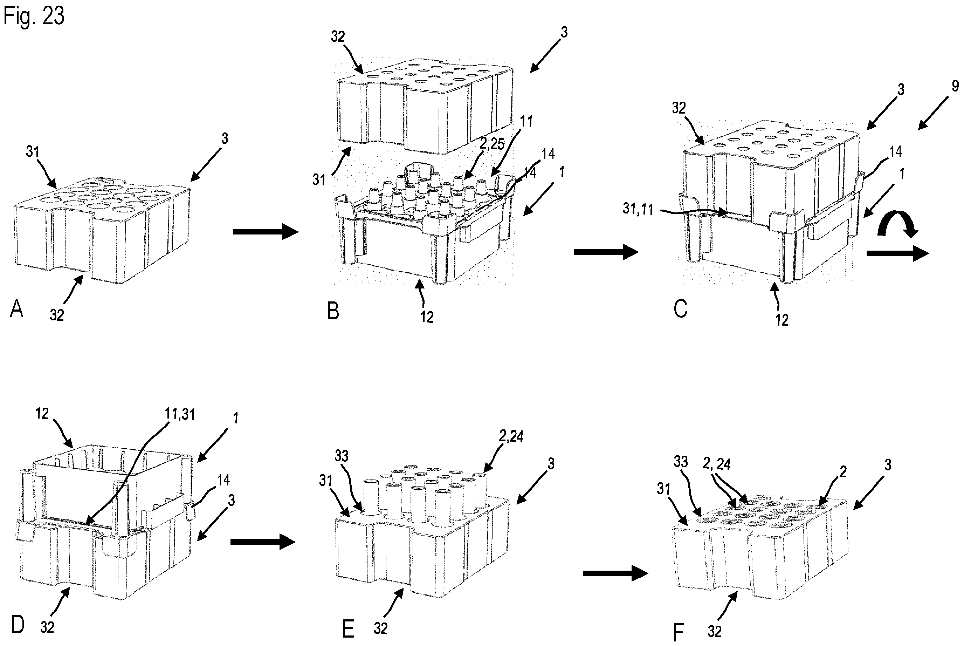

Figure 23 shows a schematic overview of different method steps for presenting pipette tip attachments in a carrier 3 previously stored in a storage device 1. The carrier 3 which is used for presentation is shown in step A, in an orientation in which later on, the pipettor consumables 2 shall be presented. In this orientation, the upper side 31 is oriented upwards. By way of example, the pipettor consumables 2 used in this method are pipette tip attachments.

For transferring the pipette tip attachments, the carrier is turned to face with its upper side 31 the upper side 11 of a storage device 1. The storage device 1 comprises in each accommodation seat 13 a pipette tip attachment in an upside-down orientation, in which the plug-on aperture is oriented towards the lower side 12 of the storage device 1. This situation is shown in step B.

In a next step (step C), the carrier 3 is moved onto the storage device 1 to abut the storage device 1 face-to-face, which is with the upper sides 11, 31 essentially abutting each other. The storage device 1 and the carrier 3 here form a presentation assembly 9. In case the storage device 1 comprises additional stop surfaces 15', these surfaces are abutted by the carrier 3. The positioning elements 14 in each corner of the storage device 1, which are configured as two-part wings - enclose the corresponding corner of the carrier plate 31, thereby bringing the presentation seats 33 into a congruent position with the accommodation seats 13 of the storage device 1.

By turning the assembly of storage device 1 and carrier 3, as indicated by the semicircular arrow, the carrier 3 and the storage device 1 are moved into a positioned to allow the pipette tip attachments, originally stored in the accommodation seats 13 of the storage device 13, sliding into the respective, congruent presentation seat 33 of the carrier 3. This situation is shown in step D. Accordingly, the pipette tip attachments are turned from the upside-down orientation, with the plug-on apertures 24 within the storage device 1 and the functional element presented at the upper side 11, into the "normal" presentation orientation, with the plug-on aperture 24 presented at the upper side 31.

For a better overview, the process of the pipette tip attachments being turned around and being on the way of sliding into the presentation seats, the situation of step D is shown also in step E, but without the presence of the storage device 1. Thus, the situation shown in step E is an artificial time section for illustration purpose.

As a result, the pipettor consumables 2 are seated within the corresponding presentation seats 33 in an orientation in which the plug-on apertures 24 are arranged at the upper side 31 of the carrier 3. In this situation, the pipettor 6 may pick up the pipettor consumable 6 for further use.

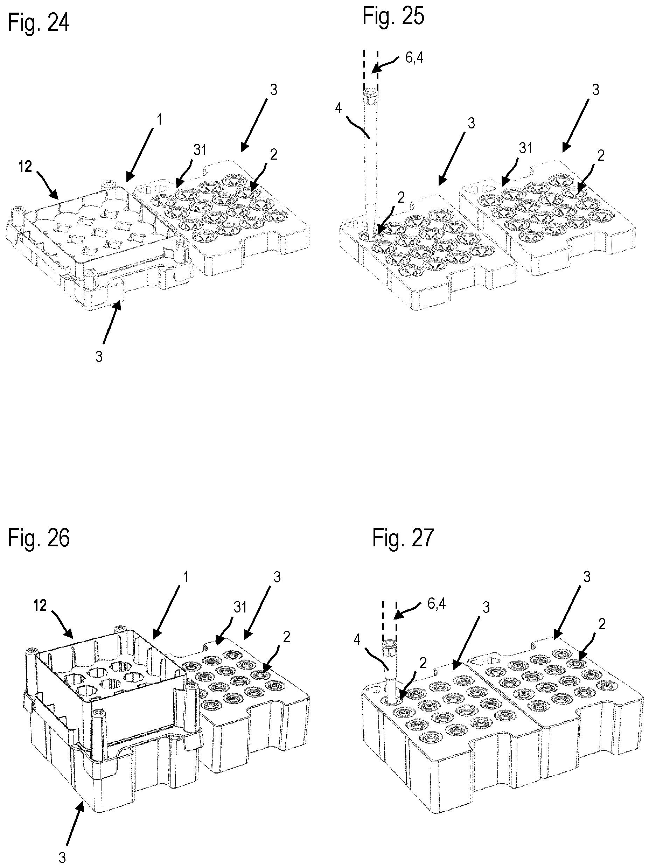

Figure 24 shows a schematic overview of a storage device 1 positioned face-to-face on one of two carrier 3. The two carrier 3 in this case occupy the footprint of a standard microplate. It is particularly suitable that the positioning of the carrier(s) 3 is guided to bring the presentation seats 3 into a position which corresponds to the position of wells of a microplate if placed at the same place. This would allow addressing the presented pipettor consumable 6 in a same manner as addressing a well of a microplate at the same position. The picking up of a presented pipette tip attachment by a pipette tip 4, which is connected to a pipettor 6, is indicated in Figure 25, with the connection of the pipette tip 4 to a pipettor 6, and preferably to a liquid handling system 4, being indicated merely by dashed lines.

Figures 26 and 27 show in analogy to the situation shown in Figures 25 and 25 a schematic view of different embodiments of a storage device 1 positioned face-to-face on one of two carrier 1. Also here, the two carrier occupy together an area which essentially corresponds to the footprint of a standard microplate. With respect to the position of the carriers 3, and particularly the position of the presentation seats 33, the same applies as discussed in Figures 24 and 25.

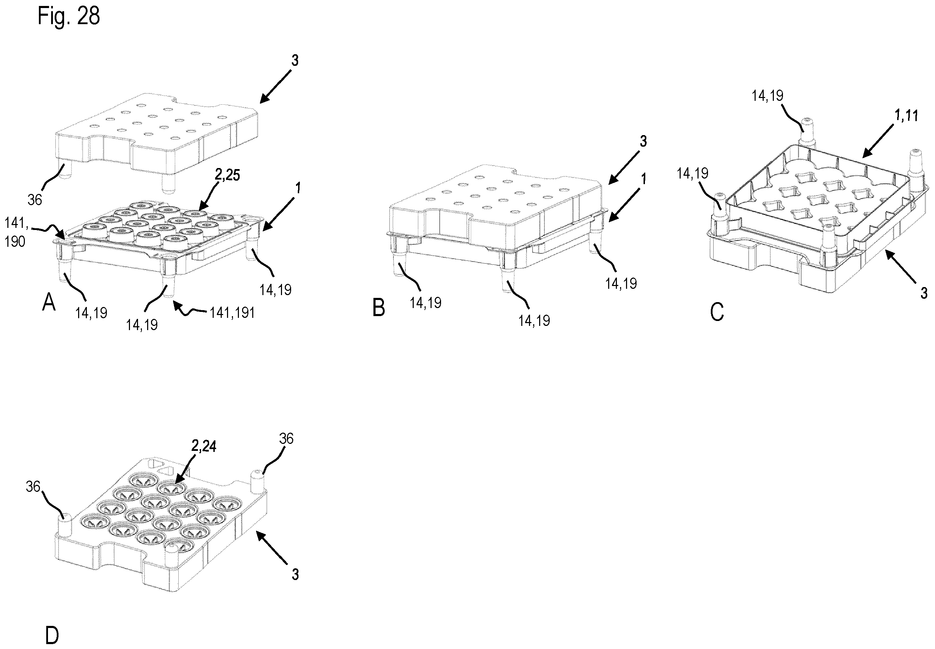

Figure 28 shows a schematic overview of positioning a storage device 1 and a carrier 3 face to face to each other in a different embodiment. In particular, the positioning elements 14 of the storage device are configured differently, as they are adapted to receive distinct positioning elements 36 of the carrier 3. The carriers positioning elements 36 are here configured as pin-like structures, arranged on the upper side 31 and extending away thereof. In total, the carrier 3 comprises a positioning element 36 on three of the four corners of the carrier plate. Compare situations A and D. The positioning elements 14 of the storage device 1 are here configured to function as positioning element 14 and further also as a stacking element 19. They are here configured as hollow tubes, which may receive at the upper side 11 of the storage device 1 either a positioning element 36 of a carrier 3 which is placed face-to-face, or a combined position/stacking element 14,19 of a storage device 1 stacked from above. In any case, also in this embodiment, the positioning element 14 mediate a correct positioning of storage device 1 and carrier 3 to turn upside-down oriented pipettor consumables 2 in the storage device 1 into an upright position in the carrier 3, as explained in Figure 21.

Figure 29 shows a schematic overview of two storage devices 1 in an exemplary embodiment about to be stacked. Also in comparison with Figure 30, the positioning elements 14 of the lower storage device 1 guide the stacking elements 19 of the upper storage device 1 into a desired stacking position. Thus, the positioning elements 14 here further function as stacking elements 19. The interaction of the positioning elements 14 and stacking elements 19 allow the formation of a stable stack (storage assembly 8) of a multitude of storage devices 1, as shown in Figure 30.

Figure 31 shows a schematic overview of two storage devices in a different embodiment about to be stacked. The positioning elements 14 of the storage devices 1 function here again additionally as stacking elements 19, guiding the upper storage device 1 into the desired stacking position on the lower storage device 1. Analogously to the situations in Figures 29 and 30, this configuration allows a stable stacking of a multitude of storage devices 1 (to a storage assembly 8), as shown in Figure 32.

**REFERENCE SIGNS LIST**

| | | | |
|---|---|---|---|
| 1 | storage device | 25 | functional element |
| 2 | pipettor consumable | | |
| 3 | carrier | 30 | carrier plate |
| 4 | pipette tip | 31 | upper side of carrier plate |
| 5 | liquid handling system | 32 | bottom side of |
| 6 | pipettor | | carrier plate |
| 7 | longitudinal axis | 33 | presentation seat |
| | | 34 | longitudinal side of carrier plate |
| 10 | storage plate | | |
| 11 | upper side of storage plate | 35 | transverse side of carrier plate |
| 12 | bottom side of storage plate | 36 | positioning element of carrier plate |
| 13 | accommodation seat | | |
| 14 | positioning element | 40 | proximal end of |
| 15 | stop surface | | pipette tip |
| 16 | longitudinal side | 41 | distal end of pipette tip |
| 17 | transverse side | | |
| 18 | edge | | |
| 19 | stacking element | 60 | fitting end of pipet tor |
| 20 | proximal end of pipettor consumable | 130 | support bottom ofaccommodation seat |
| 21 | distal end of pipettor consumable | 131 | lateral support ofaccommodation seat |
| 22 | exterior wall | | |
| 23 | inner cavity | | |
| 24 | plug-on aperture | | |
| 140 | wing part of positioning element | 191 | distal end of stacking element |
| 141 | pin | | |
| 190 | fitting aperture of stacking element | | |

## Claims

1. A storage device (1) for storing one or more pipettor consumables (2), the storage device (1) comprising a storage plate (10) having an upper side (11) and a lower side (12), and, on the upper side (11), a number of accommodation seats (13), wherein each accommodation seat (13) is configured to receive a pipettor consumable (2) in an upside down orientation, and wherein the storage device (1) comprises one or more positioning elements (14) for positioning the storage device (1) in relation to a carrier (3), and/or one or more stacking elements (19) for stacking the storage device (1) with another storage device (1).

2. The storage device (1) according to claim 1, wherein each accommodation seat (13) comprises a support bottom (14) and a lateral support (15) , wherein each accommodation seat (13) is configured to hold a pipettor consumable (2) in that a proximal end (20) of a pipettor consumable (2) comprising a plug-on aperture (24) abuts the support bottom (14) with play, while a distal end (21) of a pipettor consumable (2) comprising a functional element (25) faces away from the support bottom (14) when the pipettor consumable (2) is inserted into an accommodation seat (13).

3. The storage device (1) according to one of the previous claims, comprising at least two positioning elements (14) extending away from the upper side (11), wherein at least one of the positioning elements (14) is configured as a two-part wing, enclosing an edge being in alignment with an edge (18) formed by a longitudinal side (16) and a transverse side (17) of the storage device (1) at the upper side (11).

4. The storage device (1) according to one of the claims 1 to 3, comprising at least two positioning elements (14) , wherein at least one of the positioning elements (14) is configured as a pin (141) extending from the upper side (11) of the storage plate (10) towards a bottom side (12) of the storage plate (10), the hollow pin (141) being arranged at an edge (18) formed by a longitudinal side (16) and a transverse side (17) of the storage device (1).

5. The storage device (1) according to one of the previous claims, comprising two or more stacking elements (19), wherein each stacking element (19) is positioned in an edge (18) formed by a longitudinal side (16) and an adjacent transverse side (17) of the storage device (1).

6. The storage device (1) according to claim 5, wherein one or each of the stacking elements (19) are conical tapered tubes with a fitting aperture (190) at the upper side (11) of the storage plate (10), and a distal end (191) at the bottom side (12).

7. The storage device (1) according to one of the claims 5 or 6, wherein the distal end (191) of a stacking element (19) is configured to interact with a positioning element (14) of a storage device (1) positioned below, or wherein the distal end (191) of a stacking element (19) is configured to interact with a fitting aperture (190) of a stacking element (19) of a storage device (1) positioned below.

8. The storage device according to one of the previous claims, comprising one positioning element (14) and/or one stacking element (19) on each edge (18) formed by a longitudinal side (16) and a transverse side (17).

9. The storage device (1) according to one of the previous claims, comprising at least one pipettor consumable (2), the pipettor consumable being selected from a group comprising a pipette tip, a pipette tip attachment (2'), a transport tool, a gripper tool, a suction cap tool, a reaction tool, a plating tool for bacteria or other tools comprising a plug-on aperture (24) at the proximal end (20) for being attachable to a pipettor (6) or to a pipette tip and comprising a functional element (25) at the distal end (21) .

10. The storage device (1) according to one of the previous claims, comprising at least one pipette tip attachment (2), the pipette tip attachment (2) comprising a proximal end (20), a distal end (21) and an exterior wall (22), the exterior wall (22) forming at the proximal end (20) a pipette tip reception aperture, at the distal end (21) a dispense aperture, and enclosing an inner cavity for receiving a pipette tip extention, wherein each accommodation seat (13) is configured to reversibly hold a pipette tip attachment (2) in an orientation in which the distal end (21) of the pipette tip attachment (2) abuts the support bottom (14) of the storage device (1) with play.

11. A storage assembly comprising two or more storage devices (1) according to one of the previous claims, wherein a first storage device (1) is stacked onto the other storage device (1).

12. A presentation assembly comprising a storage device (1) according to one of the claims 1 to 10, and a carrier (3), the carrier (3) comprising a carrier plate (30) with an upper side (31), a bottom side (32) and a plurality of presentation seats (33) on the upper side (31) of the carrier plate (30), wherein the number of presentation seats (33) of the carrier (3) corresponds to the number of accommodation seats (13) of the storage device (1), and wherein the presentation seats (33) are arranged in an array which is mirror-inverted to the array of the accommodation seats (13) on the upper side (11) of the storage device (1).

13. The assembly according to claim 12, wherein the storage device (1), with the upper side (11) of the storage plate (10), abuts with the upper side (31) of the carrier (3), so that opposite to each accommodation seat (13) of the storage device (1), one presentation seat (33) of the carrier (3) is positioned.

14. The assembly according to claim 12 or 13, wherein for bringing the accommodation seats (13) and the presentation seats (33) into a congruent position to each other, each position element (14) of the storage device (1) is configured to act onto the carrier (3) in a position-specific manner.

15. A method of stacking two of more storage devices (1) according to one of the claims 1 to 11, wherein a first storage device (1) is stacked onto the other storage device (1), and wherein the stack is stabilized by the positioning elements and/or the stacking elements of one storage device (1) interacting with the positioning elements and/or stacking elements of the other storage device (1).

16. A method of presenting a stored pipettor consumable (2) to a pipettor (6), comprising the following steps:
- providing a storage device (1) according to one of the claims 1 to 11, the storage device (1) comprising a pipettor consumable (2) in an accommodation seat (13) of the storage device (1), wherein the pipettor consumable (2) comprises a proximal end (20) with a plug-on aperture (24), and a distal end (21) with a functional element (25);
- providing a carrier (3), wherein the carrier (3) comprises a carrier plate (30) with an upper side (31), a bottom side (32) and a plurality of presentation seats (33) on the upper side (31), wherein the number of presentation seats (33) correspond at least to the number of accommodation seats (13) of the storage device (1), and wherein the presentation seats (33) are arranged in an array which is mirror-inverted to the array of the accommodation seats (13) on the upper side (11) of the storage device (1),
- generating an assembly by abutting the storage device (1) with the upper side (11) onto the upper side (31) of the carrier plate (30), and bringing the accommodation seats (13) of the storage device (1) in alignment with the presentation seats (33) of the carrier (3) by use of the one or more positioning elements (14) and/or by use of the one or more stacking elements (19) of the storage device (1), thereby generating an assembly of the storage device (1) comprising at least one pipettor consumable (2) and the carrier (3),
- turning the carrier (3) with the assembly in an upright position, thereby moving the pipettor consumable (2) to rest in the presentation seat (33) of the carrier (3), and
- removing the storage device (1) from the carrier (3) while the pipettor consumable (2) remains rested in the presentation seat (33) of the carrier (3), with the plug-on aperture (24) of the pipettor consumable (2) being accessible for a pipettor (6).

17. The method of claim 16, wherein the pipettor consumable (3) is selected from a group comprising a pipette tip, a pipette tip attachment (2'), a transport tool, a gripper tool, a suction cap tool, a reaction tool, a plating tool for bacteria or other tools comprising a plug-on aperture (24) at the proximal end (20) for being attachable to a pipettor or to a pipette tip and comprising a functional element (25) at the distal end (21).

18. The method according to claim 15 or 16, wherein the pipettor consumable is a pipette tip attachment, and wherein after removing the storage device (1) from the carrier (3), a pipette tip (4), which is coupled to a pipettor (6) is inserted into the plug-on aperture (24) of the pipette tip attachment presented by the carrier (3).
